# EUROPÄISCHE PATENTSCHRIFT

(11) **EP 0 544 177 B1**
(45) Veröffentlichungstag und Bekanntmachung des Hinweises auf die Patenterteilung: **08.05.1996**
(21) Anmeldenummer: 92119600.2
(22) Anmeldetag: 17.11.1992
(51) Int. Cl.: B29C 65/20, E06B 3/96

(54) **Verfahren und Vorrichtung zur Herstellung von rechteckigen Rahmen**
Process and apparatus for manufacturing rectangular frames
Procédé et dispositif pour la fabrication de cadres rectangulaires

(30) Priorität: 21.11.1991 DE 4138352
(43) Veröffentlichungstag der Anmeldung: 02.06.1993
(73) Patentinhaber: WILLI STÜRTZ MASCHINENBAU GmbH, D-53577 Neustadt (DE)
(72) Erfinder: Stürtz, Karl-Heinz, W-5466 Neustadt-Rott (DE)
(74) Vertreter: Kossobutzki, Walter, Dipl.-Ing.(FH)

(56) Entgegenhaltungen:
- EP-A- 0 353 481
- DE-A- 3 721 861
- DE-A- 3 831 471
- DE-U- 9 207 639
- GB-A- 902 044
- KUNSTSTOFFE Bd. 71, Nr. 10, Oktober 1981, München Seiten 753 - 757 VON H. VOWINKEL 'Heizelement-, Warmgas und Extrusionsschweissen'
- KUNSTSTOFFE Bd. 73, Nr. 3, März 1983, München Seiten 118 - 122 VON H. VOWINKEL 'Bearbeiten und Fügen von Hohlkammerprofilen aus modifiziertem PVC'

## Beschreibung

Die Erfindung bezieht sich auf ein Verfahren zur Herstellung von rechteckigen Rahmen, insbesondere Fensterrahmen aus Kunststoffprofilen, bei dem vier auf Gehrung und Länge zugeschnittene Kunststoffprofilstücke unter Verwendung von auswechselbaren, dem Profilquerschnitt entsprechenden Schweißbeilagen in eine Vierkopf-Schweißmaschine eingespannt und gleichzeitig an allen Gehrungsflächen unter Erwärmung und Druck und unter Bildung von Schweißraupen miteinander verschweißt werden und bei dem die Rahmen anschließend an eine Putzmaschine zur Bearbeitung der entstandenen Schweißraupen abgegeben werden, sowie auf eine Vorrichtung zur Durchführung des Verfahrens.

Ein solches Verfahren ist aus der DE-A-3 721 861 bekannt.

Die Herstellung von Fensterrahmen oder dergleichen aus Kunststoff erfolgt in der Weise, daß vier auf Gehrung und in einer vorgegebenen Länge zugeschnittene Kunststoffprofilstücke von Hand nacheinander in eine sogenannte Vierkopf-Schweißmaschine eingelegt, ausgerichtet und eingespannt werden. Über vier plattenartige Heizvorrichtungen werden dann die Kunststoffprofilstücke gleichzeitig an ihren einander zugewandten Gehrungsflächen auf eine vorgegebene Temperatur erwärmt, die so hoch ist, daß anschließend die Gehrungsflächen nach dem Entfernen der Heizvorrichtungen durch Gegeneinanderdrücken unter Bildung von Schweißraupen miteinander verschweißen. Nach einer vorgegebenen Abkühlzeit wird der geschweißte Fensterrahmen an eine Putzmaschine übergeben, in der die Schweißraupen, zumindest im Bereich der Sichtflächen des Fensterrahmens, bearbeitet bzw. beseitigt werden. Das Verschweißen der Kunststoffprofilstücke erfolgt bei einer vorbekannten Vierkopf-Schweißmaschine meist in einer solchen Lage, daß der geschweißte Fensterrahmen eine vertikale bzw. annähernd vertikale Lage einnimmt und in dieser Lage auch von der Vierkopf-Schweißmaschine an die nachgeordnete Putzmaschine übergeben wird.

Bei der Bearbeitung der Schweißraupen eines solchen Fensterrahmens ist es möglich, die einzelnen Ecken nacheinander zu bearbeiten, wobei der Fensterrahmen immer nach der Bearbeitung einer Ecke in seiner Ebene um 90° gedreht wird. Dieses aufeinanderfolgende Bearbeiten der einzelnen Ecken nimmt, obwohl der Bearbeitungsvorgang an einer Ecke verhältnismäßig rasch erfolgt, durch die aufeinanderfolgenden Arbeitsvorgänge an den einzelnen Ecken und die dazwischenliegenden Drehvorgänge bedingt, doch verhältnismäßig viel Zeit in Anspruch. Diese Gesamt-Bearbeitungszeit ist erheblich länger als die Zeit, die für das Einlegen der Kunststoffprofilstücke und das Zusammenschweißen eines Fensterrahmens benötigt wird. Dies hat zur Folge, daß die schnelle Taktzeit der Schweißmaschine der langsameren Taktzeit der Eckenputzmaschine angepaßt werden muß.

Es sind ferner Eckenputzmaschinen für aus Kunststoffprofilstücken zusammengeschweißte Fensterrahmen bekanntgeworden, mit der mindestens zwei, meist aber alle vier Ecken des Fensterrahmens gleichzeitig bearbeitet werden können.

Eine solche Putzmaschine hat nun eine erheblich geringere Taktzeit als die vorgeordnete Vierkopf-Schweißmaschine, d.h., hier kann die in einer Fertigungsstraße mit der Vierkopf-Schweißmaschine angeordnete Eckenputzmaschine nicht in wirtschaftlich vertretbarer Weise ausgenutzt werden. Um diesen Nachteil zu vermeiden, ist es grundsätzlich möglich, einer solchen Eckenputzmaschine zwei Vierkopf-Schweißmaschinen vorzuordnen. Dies macht, insbesondere durch zusätzliche Fördereinrichtungen bedingt, einen nicht unbeachtlichen Investitionsaufwand erforderlich. Andererseits ist für die zweite Vierkopf-Schweißmaschine eine zusätzliche Bedienungsperson erforderlich, deren Lohnkosten nicht unerheblich zu den Bearbeitungskosten eines Fensterrahmens beiträgt.

Um diese Investionskosten und die Lohnkosten zu vermeiden, ist es bereits bekannt, in der Vierkopf-Schweißmaschine unter Verwendung zusätzlicher Schweißbeilagen die Kunststoffprofilstücke für zwei Fensterrahmen einzulegen und beide Fensterrahmen gleichzeitig zu schweißen. Dies setzt jedoch grundsätzlich voraus, daß beide Fensterrahmen in ihren Abmessungen und damit auch in ihrem Profil vollkommen gleich sind. Dies bedeutet, daß ein sogenannter Fensterrahmen und ein Blendrahmen nicht gleichzeitig in einer solchen Schweißmaschine hergestellt werden können. Das Einlegen der doppelten Kunststoffprofilstücke ist jedoch erheblich zeitraubender. Andererseits besteht bei einem solchen, doppelten Schweißverfahren der Nachteil, daß die beiden gleichzeitig geschweißten Fensterrahmen, vor ihrer Bearbeitung in einer Putzmaschine, wieder vereinzelt werden müssen, was eine zusätzliche Trennvorrichtung in der Fertigungsstraße erforderlich macht. Neben diesem Aufwand für eine solche Vereinzelungsvorrichtung ist jedoch bedeutsam, daß durch eine Vereinzelungsvorrichtung der Platzbedarf für eine Fertigungsstraße zur Herstellung und Bearbeitung von Fensterrahmen erheblich erhöht wird. Ein solcher Fertigungsraum ist jedoch meist nicht vorhanden oder kann nur mit zusätzlichen Kosten hergestellt werden.

Der Erfindung liegt deshalb die Aufgabe zugrunde, ein Verfahren zur Herstellung von rechteckigen Rahmen, insbesondere Fensterrahmen, aus Kunststoff aufzuzeigen, welches auf verhältnismäßig kleinem Raum durchführbar ist, keine allzuhohen Investitionskosten erfordert und trotzdem sicherstellt, daß die Leistung einer modernen und schnellen Eckenputzmaschine in wirtschaftlicher Weise ausgenutzt werden kann.

Zur Lösung dieser Aufgabe wird bei einem Verfahren der eingangs beschriebenen Gattung vorgeschlagen, daß mindestens zwei auf einem Drehtisch angeordnete Vierkopf-Schweißmaschinen wechselweise mit den Kunststoffprofilstücken bestückt und die Kunststoffrahmen wechselweise geschweißt werden.

Durch ein solches Verfahren ist es möglich, die Anzahl der pro Zeiteinheit geschweißten Fensterrahmen zu erhöhen und damit die Leistung der Eckenputzmaschine besser auszunutzen. Das Verfahren bzw. die zur Durchführung des Verfahrens erforderliche Vorrichtung erfordert keinen besonders hohen, zusätzlichen Investitionsaufwand und kann auf kleinstem Raum, meist mit der vorhandenen Hallenkapazität, ausgeführt werden. Die Bedienungsperson, die zwar noch für das Einlegen der Kunststoffprofilstücke erforderlich ist, ist jetzt besser ausgelastet, so daß die auf einen geschweißten Fensterrahmen entfallenden Lohnkosten reduziert werden.

Weitere Merkmale eines Verfahrens gemäß der Erfindung sowie einer Vorrichtung zur Durchführung des Verfahrens sind in den Ansprüchen 2 - 8 offenbart.

Die Erfindung wird nachfolgend anhand eines in einer Zeichnung stark vereinfacht dargestellten Ausführungsbeispieles näher erläutert.

In dieser Zeichnung ist eine automatische Produktionsanlage zur Herstellung von Fensterrahmen aus Kunststoffprofilen schematisch gezeigt, die in vorteilhafter Weise von einem zentralen Computer gesteuert wird. Diese Produktionsanlage besteht zunächst aus einem sogenannten Schweißkarusell 1, an das sich über einen Zwischenförderer 2, der auch als Pufferstation ausgebildet sein kann, eine nur angedeutete Eckenputzmaschine 3 anschließt.

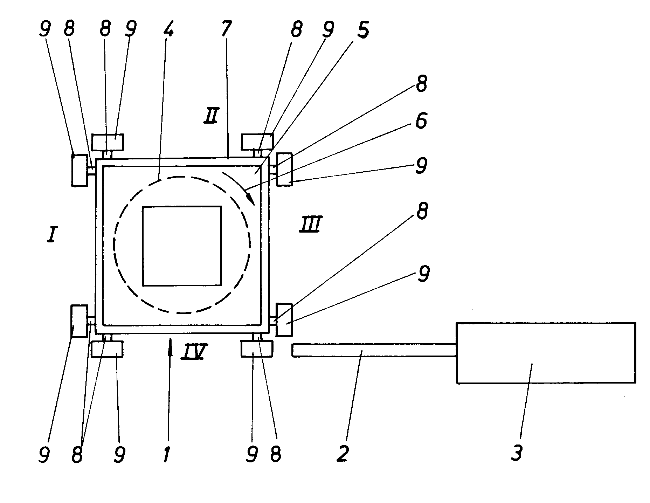

Dabei wird das Schweißkarusell 1 aus einer nicht näher gezeichneten Grundplatte gebildet, auf der sich beispielsweise über einen nur angedeuteten Kugeldrehkranz ein Drehtisch 5 abstützt. Dem Drehtisch 5 ist ein an sich bekannter, in der Zeichnung nicht dargestellter Antrieb zugeordnet, über den der Drehtisch 5 in Richtung des Pfeiles 6 jeweils immer um 90° gedreht werden kann. Der Drehtisch 5 weist zweckmäßigerweise eine quadratische Grundfläche auf.

Der Drehtisch 5 trägt ein quaderförmiges, aus metallischen Profilstücken zusammengesetztes Gestell 7, dessen Seitenflächen, von unten nach oben gesehen, um einen Winkel von etwa 5 - 15° nach innen geneigt sind, so daß das Gestell 7 eine pyramidenstumpfartige Gestalt aufweist. An jeder Seitenfläche des Gestells 7 sind jeweils zwei Führungsschienen 8 vorgesehen, die relativ gegeneinander bewegbar sind. Dabei ist meistens eine Führungsschiene 8 ortsfest angeordnet, während die andere Führungsschiene 8 über einen an sich bekannten, nicht dargestellten Antrieb parallel gegen die ortsfeste Führungsschiene 8 verschoben werden kann. Bedarfsweise können auch beide Führungsschienen 8 verschiebbar ausgebildet sein.

Auf jeder Führungsschiene 8 sind mit Abstand übereinander jeweils zwei Schweißeinheiten 9 angeordnet, die auf der sie tragenden Führungsschiene 8 ebenfalls relativ gegeneinander bewegbar sind. In zweckmäßiger Weise ist dabei jeweils die untere Schweißeinheit 9 ortsfest auf der Führungsschiene 8 angeordnet, während die obere Schweißeinheit 9 gegen die untere Schweißeinheit 9 und zurück bewegbar ist. Die auf zwei auf einer Seite des Gestells 7 befindlichen Führungsschienen 8 angeordneten, oberen Schweißeinheit 9 sind dabei immer im Gleichlauf gegen die unteren Schweißeinheiten 9 bewegbar.

Jede Schweißeinheit 9 besteht in an sich bekannter Weise aus zwei Spannelementen und einer plattenartigen Heizvorrichtung, einem sogenannten Heizschwert.

Im dargestellten und erläuterten Ausführungsbeispiel sind alle vier Seiten des Gestells 7 vollkommen gleich ausgebildet, d.h., auf jeder Seite befinden sich zwei Führungsschienen 8 mit jeweils zwei Schweißeinheiten 9 und somit eine komplette Schweißmaschine. Allen vier Schweißmaschinen ist eine gemeinsame Steuerung zugeordnet, die nur in vorgegebenen Stellungen der einzelnen Schweißmaschinen auf dieselben wirksam ist. Aufgrund des quadratischen Drehtisches 5 kann jede Seite des Gestells 7 und damit jede dort befindliche Schweißmaschine nacheinander in die Positionen I - IV bewegt werden.

In der Position I wird die Schweißmaschine mit vier Kunststoffprofilstücken, beispielsweise von Hand, bestückt. Dazu werden zunächst alle in der Position I befindlichen Schweißeinheiten 9, von einem Programm gesteuert, in eine vorgegebene Lage gebracht, in der die auf Länge und Gehrung zugeschnittenen Kunststoffprofilstücke eingelegt und festgespannt werden können. Dabei weist jede Schweißeinheit 9 sogenannte Schweißbeilagen auf, die dem Profilquerschnitt der Kunststoffprofilstücke angepaßt sind. Für das sachgerechte Einlegen und Festspannen der Kunststoffprofilstücke ist normalerweise nur eine Zeit von etwa 30 - 40 Sekunden erforderlich.

Nach dem Einlegen und Festspannen der Kunststoffprofilstücke kann der Antrieb des Drehtisches 5 angeschaltet und der Drehtisch 5 mit dem Gestell 7 um einen Winkel von 90° gedreht werden, bis sich die eingespannten Kunststoffprofilstücke in der Position II befinden. Bereits während des Drehvorganges, also sofort nach dem ordnungsgemäßen Einlegen und Festspannen der Kunststoffprofilstücke, wird zwischen die einander zugewandten Gehrungsflächen jeweils das Heizschwert eingeführt und die Profilstücke durch die Schweißeinheiten 9 so gegeneinander bewegt, daß alle Gehrungsflächen so stark erwärmt werden, daß dieselben nach dem Entfernen der Heizschwerter und durch weiteres Gegeneinanderbewegen der Kunststoffprofilstücke durch Druck miteinander verschweißen. Dabei findet der eigentliche Schweißvorgang in der Position II des Drehtisches 5 statt. In der Position I des Drehtisches 5 können während dieser Zeit bereits neue Kunststoffprofilstücke für einen weiteren Fensterrahmen eingelegt werden. Sobald dies geschehen ist, werden auch diese Kunststoffprofilstücke durch entsprechende Bewegung des Drehtisches 5 in die Position II bewegt und dort zu einem Fensterrahmen miteinander verschweißt.

In der Position III des Drehtisches 5 wird keine Bearbeitung am geschweißten Fensterrahmen vorgenommen. Hier findet lediglich eine Abkühlung der Schweißnähte statt. In der Position IV des Drehtisches 5 werden die Spannelemente der Schweißeinheiten 9 geöffnet, so daß der fertig geschweißte Fensterrahmen in an sich bekannter Weise an den Zwischenförderer 2 übergeben wird. Von diesem Zwischenförderer 2, gelangt der geschweißte Fensterrahmen in die Eckenputzmaschine 3, in der alle Ecken des geschweißten Fensterrahmens gleichzeitig bearbeitet bzw. geputzt werden.

Die Schweißbeilagen der Schweißeinheiten 9 einer Schweißmaschine können unterschiedlich ausgebildet sein, so daß es ohne ein Auswechseln der Schweißbeilagen möglich ist, wechselweise in zwei Schweißmaschinen jeweils einen Fenster- bzw. Flügelrahmen und einen Blendrahmen herzustellen.

In Abhängigkeit von der Schweiß- und Abkühlzeit kann es zweckmäßig sein, dem Drehtisch 5 mit den Schweißmaschinen zwei Eckenputzmaschinen 3 zuzuordnen, die dann jedoch um einen Winkel von 180° zueinander versetzt sind. Bedarfsweise können auf dem Drehtisch 5 auch mehr als vier Schweißmaschinen angeordnet sein.

## Patentansprüche

1. Verfahren zur Herstellung von rechteckigen Rahmen, insbesondere Fensterrahmen aus Kunststoffprofilen, bei dem vier auf Gehrung und Länge zugeschnittene Kunststoffprofilstücke unter Verwendung von auswechselbaren, dem Profilquerschnitt entsprechenden Schweißbeilagen in eine Vierkopf-Schweißmaschine (9) eingespannt und gleichzeitig an allen Gehrungsflächen unter Erwärmung und Druck und unter Bildung von Schweißraupen miteinander verschweißt werden und bei dem die Rahmen anschließend an eine Putzmaschine (3) zur Bearbeitung der entstandenen Schweißraupen abgegeben werden,
dadurch gekennzeichnet,
daß mindestens zwei auf ein und demselben Drehtisch (5) angeordnete Vierkopf-Schweißmaschinen wechselweise mit den Kunststoffprofilstücken bestückt und die Kunststoffrahmen wechselweise geschweißt werden.

2. Verfahren nach Anspruch 1,
dadurch gekennzeichnet,
daß vier auf einem Drehtisch (5) angeordnete Vierkopf-Schweißmaschinen (9) nacheinander mit den Kunststoffprofilstücken bestückt und die Kunststoffrahmen nacheinander geschweißt werden.

3. Verfahren nach Anspruch 1,
dadurch gekennzeichnet,
daß von vier auf einem Drehtisch (5) angeordneten Vierkopf-Schweißmaschinen (9) jeweils zwei nicht benachbarte Vierkopf-Schweißmaschinen gleichzeitig mit den Kunststoffprofilstücken bestückt und die Kunststoffrahmen in jeweils zwei Vierkopf-Schweißmaschinen wechselweise geschweißt werden.

4. Verfahren nach mindestens einem der Ansprüche 1 - 3,
dadurch gekennzeichnet,
daß die einzelnen Vierkopf-Schweißmaschinen (9) mit im Querschnitt unterschiedlichen Kunststoffprofilstücken bestückt werden.

5. Vorrichtung zur Herstellung von rechteckigen Rahmen, insbesondere Fensterrahmen, aus Kunststoffprofilen, insbesondere zur Durchführung des Verfahrens nach mindestens einem der Ansprüche 1 - 4, bestehend aus einer Vierkopf-Schweißmaschine (9) mit nachgeordneter Putzmaschine (3),
dadurch gekennzeichnet,
daß die Vierkopf-Schweißmaschine (9) zusammen mit mindestens einer weiteren Vierkopf-Schweißmaschine (9) auf einem Drehtisch (5) angeordnet ist.

6. Vorrichtung nach Anspruch 5,
dadurch gekennzeichnet,
daß vier Vierkopf-Schweißmaschinen (9) jeweils um einen Winkel von 90° zueinander versetzt auf dem Drehtisch (5) angeordnet sind.

7. Vorrichtung nach Anspruch 5 und/oder 6,
dadurch gekennzeichnet,
daß den einzelnen Vierkopf-Schweißmaschinen (9) eine gemeinsame Schweißsteuerung zugeordnet ist und nur die in der Schweißposition (II) befindliche Vierkopf-Schweißmaschine mit der Schweißsteuerung gekoppelt ist.

8. Vorrichtung nach mindestens einem der Ansprüche 5 - 7,
dadurch gekennzeichnet,
daß dem Drehtisch (5) bzw. den Vierkopf-Schweißmaschinen (9) zwei gegeneinander versetzte Putzmaschinen (3) zugeordnet sind.

## Claims

1. Method for the manufacture of rectangular frames, in particular window frames consisting of plastic profiles, in which four plastic profile pieces mitred and cut to length are clamped in a four-head welding machine (9) using interchangeable welding inserts corresponding to the profile cross-section and are welded together simultaneously on all mitre surfaces under heat and pressure, forming welding beads, and in which the frames are then delivered to a trimming machine (3) for machining the welding beads formed, characterised in that at least two four-head welding machines arranged on the same turntable (5) are alternately provided with the plastic profile pieces and the plastic frames are welded alternately.

2. Method according to claim 1, characterised in that four four-head welding machines (9) arranged on a turntable (5) are provided successively with the plastic profile pieces and the plastic frames are welded successively.

3. Method according to claim 1, characterised in that of four four-head welding machines (9) arranged on a turntable (5), two non-adjacent four-head welding machines are simultaneously provided with the plastic profile pieces, and the plastic frames are welded alternately in each case in two four-head welding machines.

4. Method according to one or more of claims 1-3, characterised in that the individual four-head welding machines (9) are provided with plastic profile pieces of different cross-section.

5. Apparatus for the manufacture of rectangular frames, in particular window frames, consisting of plastic profiles, in particular for carrying out the method according to one or more of claims 1-4, consisting of a four-head welding machine (9) with subsequent trimming machine (3), characterised in that the four-head welding machine (9) together with at least one additional four-head welding machine (9) is arranged on a turntable (5).

6. Apparatus according to claim 5, characterised in that four four-head welding machines (9) are arranged in each case offset by an angle of 90° to each other on the turntable (5).

7. Apparatus according to claim 5 and/or 6, characterised in that a common welding control means is associated with the individual four-head welding machines (9) and only the four-head welding machine which is in the welding position (II) is coupled to the welding control means.

8. Apparatus according to one or more of claims 5-7, characterised in that two mutually offset trimming machines (3) are associated with the turntable (5) or the four-head welding machines (9).

## Revendications

1. Procédé pour fabriquer des cadres rectangulaires, notamment des cadres de fenêtres avec des profilés en matière plastique, selon lequel on serre quatre pièces profilées en matière plastique, qui sont découpées en onglet et à longueur, moyennant l'utilisation de cales de soudage interchangeables, qui correspondent à une section transversale de profilé, dans une soudeuse (9) à quatre têtes et on les réunit par soudage simultanément au niveau de toutes les surfaces en onglet, moyennant l'application d'un chauffage et d'une pression et avec formation de cordons de soudure, et selon lequel on envoie ensuite les cadres à une machine d'ébarbage (3) pour traiter les cordons de soudure obtenus, caractérisé en ce qu'on met en place alternativement les pièces profilées en matière plastique sur au moins deux soudeuses à quatre têtes, disposées sur le même plateau rotatif (5) et qu'on soude alternativement les cadres en matière plastique.

2. Procédé selon la revendication 1, caractérisé en ce qu'on met en place successivement les pièces profilées en matière plastique sur quatre soudeuses (9) à quatre têtes, disposées sur un plateau rotatif (5), et qu'on soude successivement les cadres en matière plastique.

3. Procédé selon la revendication 1, caractérisé en ce qu'on met en place simultanément les pièces profilées en matière plastique sur respectivement deux soudeuses à quatre têtes non voisines parmi quatre soudeuses (9) à quatre têtes, disposées sur le plateau rotatif (5) et qu'on soude alternativement les cadres en matière plastique dans respectivement deux soudeuses à quatre têtes.

4. Procédé selon au moins l'une des revendications 1 à 3, caractérisé en ce qu'on met en place des pièces profilées en matière plastique ayant des sections transversales différentes, sur les différentes soudeuses (9) à quatre têtes.

5. Dispositif pour fabriquer des cadres rectangulaires, notamment des cadres de fenêtres, avec des profilés en matière plastique, notamment pour la mise en oeuvre du procédé selon au moins l'une des revendications 1-4, constitué par une soudeuse (9) à quatre têtes en aval de laquelle est raccordée une machine d'ébarbage (3), caractérisé en ce que la soudeuse (9) à quatre têtes est disposée, conjointement avec au moins une autre soudeuse (9) à quatre têtes, sur un plateau rotatif (5).

6. Procédé selon la revendication 5, caractérisé en ce que quatre soudeuses (9) à quatre têtes sont disposées, en étant décalées respectivement d'un angle de 90°, sur le plateau rotatif (5).

7. Procédé selon la revendication 5 et/ou 6, caractérisé en ce qu'une unité commune de commande de soudage est associée aux différentes soudeuses (9) à quatre têtes et que seule la soudeuse à quatre têtes, située dans la position de soudage II, est couplée à l'unité de commande de soudage.

8. Procédé selon au moins l'une des revendications 5-7, caractérisé en ce que deux machines d'ébarbage (3) décalées l'une par rapport à l'autre sont associées au plateau rotatif (5) ou aux soudeuses (9) à quatre têtes.
